# EUROPEAN PATENT APPLICATION

(11) **EP 2 747 397 A1**
(43) Date of publication of application: **25.06.2014**
(21) Application number: 12306641.7
(22) Date of filing: 20.12.2012
(51) Int. Cl.: H04M 3/42, H04W 88/06, H04L 12/40

(54) **Multipurpose network port**

(71) Applicant: Thomson Licensing, 92130 Issy-les-Moulineaux (FR)
(72) Inventor: Withofs, Tim, 2930 Brasschaat (BE)
(74) Representative: Arnold, Klaus-Peter

(57) **Abstract**

It is proposed a method for activating a service on a principal device connected, via a port connector (208) comprising a set of pins, to a device suitable to provide services to the principal device, the set of pins having a first and a second subset of pins, the first and the second subset of pins having no pins in common, the method comprising detecting (101) which of a first and a second service is signaled on the first and the second subset of pins, and selecting and activating (102) the detected service.

## Description

### TECHNICAL FIELD

The invention relates to the field of network ports management. More specifically, it relates to a method for using a single network port as a multipurpose network port.

### BACKGROUND

The amount of services that have to be offered by devices, such as residential gateways, typically expands. This results in a rise in the amount of ports on such systems. However, in a lot of cases, some services are mutual exclusive in the eyes of the customers using the device. For example, given a device with two separate ports, it often occurs that the customer uses the first port or the second port, but not both at the same time. However, in order to accommodate all possible needs, a system developer has to design a system taking into account all requested services even though they are mutual exclusive.

In addition to that, ports start to become a determining factor for design size even though they provide access to a single service. The amount of wasted space increases in the case of mutual exclusive services, as each service needs a separate port which can be quite large.

It is an object of the present invention to allow more than one service to be provided on a system via a single port.

### SUMMARY OF THE INVENTION

It is proposed a method for activating a service on a principal device connected, via a port connector (208) comprising a set of pins, to a device suitable to provide services to the principal device, the set of pins having a first and a second subset of pins, the first and the second subset of pins having no pins in common, the method comprising:
- detecting (101) which of a first and a second service is signaled on the first and the second subset of pins, and;
- selecting and activating (102) the detected service.

In this way, an automated selection, which limits user interaction, is enabled. This leads to limited constraints for the user. Moreover, the amount of required physical port connectors in the principal device is reduced.

According to another aspect of the invention, in case the first service signaling is detected, the first service is activated using a third subset of pins of the set of pins.

Favorably, the connector is a RJ45 connector (209).

Preferably, the first service is Fast Ethernet and the pins of the third subset of pins are pin 1, 2, 3 and 6, and the second service is DSL/PSTN.

Favorably, it is detected whether Fast Ethernet or DSL/PSTN is enabled, and, in the case neither Fast Ethernet nor DSL/PSTN is detected, then Gigabit Ethernet mode is selected.

Optionally, the principal device comprises a switch which always switches pins 4 and 5 to DSL/PSTN mode after switching on the principal device, and which switches to the Ethernet circuit of the principal device when neither Fast Ethernet nor DSL/PSTN is detected.

It is also proposed an apparatus (201) with a port connector (208) for connecting a device suitable to provide services to the apparatus, the port connector comprising a set of pins, the set of pins having a first and a second subset of pins, the first and the second subset of pins having no pins in common, the apparatus comprising detectors (205, 206) for detecting which of a first and a second service is signaled on the first and the second subset of pins, and a selector component (207) for selecting and activating the detected service on the apparatus.

Optionally, the apparatus is a residential gateway.

For a better understanding, the invention shall now be explained in more detail in the following description with reference to the figures. It is understood that the invention is not limited to the described embodiments and that specified features can also expediently be combined and/or modified without departing from the scope of the present invention as defined in the appended claims.

### BRIEF DESCRIPTION OF THE DRAWINGS

Fig.1 represents a flow diagram of the present invention
Fig.2 shows the hardware configuration of a residential gateway illustrating the exemplary embodiment.

### DETAILED DESCRIPTION OF PREFERRED EMBODIMENTS

In the following, an exemplary embodiment of the invention will be described.

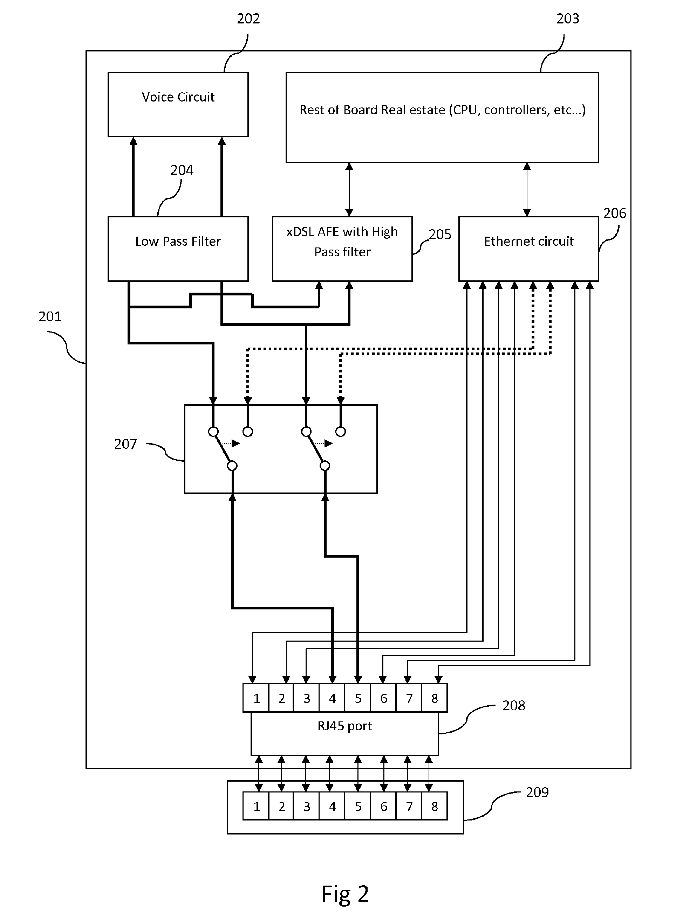

The principal device is in this example a residential gateway 201. The residential gateway 201 comprises hardware features as described in Figure 2, namely:
- An RJ45 port connector 208
- A 10BaseT/100Base-TX/1000Base-T Gigabit Ethernet interface 206
- A selector component 207 controlled by the residential gateway to be able to automatically choose between the various available interfaces
- A voice circuit 202
- A low pass filter 204
- A xDSL AFE with High pass filter 205
- The rest of Board Real estate 203 of the gateway device 201, comprising a CPU and controllers.

A RJ45 connector 209 is connected to the RJ45 port connector 208.

The pins of the RJ45 port connector 208 that can be used as multi-purpose pins are pins 4,5,7 and 8. The amount of multi-purpose pins used depends on the interfaces that are multiplexed. In the present exemplary embodiment, pins 4 and 5 are used, that is two multi-purpose pins. Depending on the nature of the access technologies that can be connected to the RJ45 port connector 208, one, two, three or four multi-purpose pins may be used.

A service provider offers multiple types of services to his end customer. In the example, those services are WAN (Wide Area Network) technologies, such as:
- Ethernet
- xDSL (ADSL, ADSL2, ADSL2+, VDSL, VDSL2 among others) + PSTN, wherein PSTN stands for Public Switched Telephone Network, and DSL stands for Digital Subscriber Line.

These services are provided to the residential gateway 201 via a RJ45 connector 209.

The residential gateway has a selector component 207. This selector component 207 enables to select which service is to be activated on the residential gateway 201 among the following services: Ethernet, PSTN only, PSTN+DSL or DSL only.

A transceiver is connected to the residential gateway 201 via a RJ45 connector. The RJ45 connector has eight pins.

The Ethernet service is detectable on pins 1,2,3 and 6 of the RJ45 port connector 208. Once detected, this service is activated on the eight pins of the RJ45 port connector 208.

The modus operandi of the selector component will now be described.

The selector component 207 has two selection modes: the first selection mode is "xDSL (+PSTN) mode" and the second selection mode is "Gigabit mode".

In the selection mode "xDSL (+PSTN) mode", pins 4 and 5 of the RJ45 port connector 208 are linked with the voice circuit 202 of the residential gateway 201, and pins 1, 2, 3, 6, 7 and 8 of the RJ45 port connector 208 are linked to the Ethernet circuit 206 of the residential gateway 201.

In the selection mode "Gigabit mode", the eight pins of the RJ45 port connector 208 are connected to the Ethernet circuit 206 of the residential gateway 201.

Whether the selector component is in "xDSL (+PSTN) mode" or is in "Gigabit mode", the pins 1, 2, 3 and 6, 7 and 8 of the RJ45 port connector 208 stay connected to the Ethernet circuit 206 of the residential gateway 201. Consequently, in the two selections modes, the Ethernet circuit 206 of the residential gateway 201 enables to detect the signaling of an Ethernet service, via the pins 1, 2, 3 and 6 of the RJ45 port connector 208. A resulting advantage is the use of one port instead of two ports.

Initially, the selector component 207 is set on "XDSL (+PSTN) mode". In the "xDSL (+PSTN) mode" setting, the voice circuit 202 of the residential gateway 201 enables to detect the signaling of a PSTN service conveyed via pins 4 and 5 of the RJ45 port connector 208.

Likewise, initially, the AFE xDSL (Analog Front End) of the residential gateway 201 is disabled. This prevent signals from being driven onto the RJ45 port connector 208.

Then, the voice circuit 202 and the Ethernet circuit 206 of the residential gateway sense continuously, and in parallel, respectively on pins 4 and 5 on the one hand, and on the pins 1, 2, 3 and 6 on the other hand, the presence of any signaled services coming from a device connected to the residential gateway 201 via the RJ45 port connector 208.

This sensing can be done in parallel, because it is done on distinct sets of pins - namely 4 and 5 on the one hand, and 1, 2, 3 and 6 on the other hand - having no pins in common.

When the Ethernet circuit 206 of the residential gateway 201 detects Ethernet signals on pins 1, 2, 3 and 6, the Ethernet circuit 206 changes the configuration mode of the selector component 207 to "Gigabit mode"; "Gigabit mode" of the selector component 207 is enabled, Gigabit link is initialized and the xDSL and PSTN hardware of the residential gateway 201 are disabled. Then, the user waits for the Ethernet link to set. Once this link is set, the user is advised that the final state is "Ethernet". If the synchronization is lost, then the selector component 207 returns to its initial state.

When the voice circuit of the residential gateway 201 detects PSTN signals, then the selector component 207 is kept on the "xDSL (+PSTN) mode" setting. The detection of the PSTN signals enables the xDSL AFE 205 to synchronize itself with the transceiver. User is advised via an indicator that DSL is trying to synchronize and is asked to not disconnect the cable. Two options are then available: either DSL signals are detected or they are not detected.

If DSL signals are detected, DSL synchronization is finalized and the user is advised via an indicator that DSL and PSTN are activated. Ethernet interface is then set to disabled.

If DSL signals are not detected, that is, when no handshake has been detected by the DSL AFE after X seconds, the user is advised via an indicator that PSTN service is activated and that DSL service is not activated. However DSL may keep on trying to synchronize.

When after X seconds, no PSTN signals or Ethernet signals are detected, the xDSL AFE circuit of the residential gateway will look for DSL signals. The xDSL AFE is enabled and tries to synchronize itself with the transceiver for Y seconds. User is advised via an indicator not to unplug the cable.

If xDSL AFE 205 detects DSL signals, DSL synchronization is finalized, and the user is advised via an indicator that xDSL is activated. The final selected interface is then set to "DSL only" and the Ethernet interface is set to disabled.

If no DSL signals are detected by xDSL AFE 205 after Y seconds of xDSL synchronization, then the xDSL AFE 205 switches off. Optionally, the user is advised, via an indicator, to unplug the cable and check wiring. The residential gateway 201 halts the detection process into a state of "Error state" when no signal is detected during Z seconds. After Z seconds of no signal, the residential gateway 201 restarts from its initial state.

If at any time, both Ethernet signaling and PSTN or xDSL signals are detected before an interface is finally selected, an error state is flagged toward user with indication to unplug the cable and check wiring.

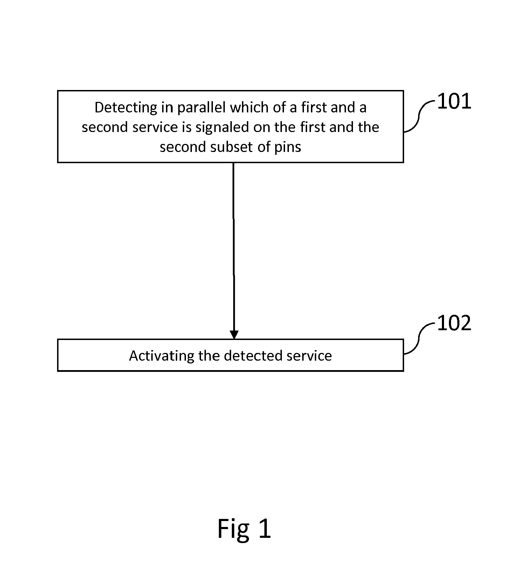

Figure 1 shows the principles of the invention. First, it is detected 101 in parallel which of a first and a second service is signaled on a first and a second subset of pins. Then the detected service is activated 102.

## Claims

1. Method for activating a service on a principal device connected, via a port connector (208) comprising a set of pins, to a device suitable to provide services to the principal device, the set of pins having a first and a second subset of pins, the first and the second subset of pins having no pins in common, the method comprising:
- detecting (101) which of a first and a second service is signaled on the first and the second subset of pins, and;
- selecting and activating (102) the detected service.

2. Method according to claim 1, wherein in case the first service signaling is detected, the first service is activated using a third subset of pins of the set of pins.

3. Method according to claim 1 or 2 wherein the connector is a RJ45 connector (209).

4. Method according to claim 3 wherein the first service is Fast Ethernet and the pins of the third subset of pins are pin 1, 2, 3 and 6, and the second service is DSL/PSTN

5. Method according to claim 4 wherein it is detected whether Fast Ethernet or DSL/PSTN is enabled, and, in the case neither Fast Ethernet nor DSL/PSTN is detected, then Gigabit Ethernet mode is selected.

6. Method according to claim 5 wherein the principal device comprises a switch which always switches pins 4 and 5 to DSL/PSTN mode after switching on the principal device, and which switches to the Ethernet circuit of the principal device when neither Fast Ethernet nor DSL/PSTN is detected.

7. An apparatus (201) with a port connector (208) for connecting a device suitable to provide services to the apparatus, the port connector comprising a set of pins, the set of pins having a first and a second subset of pins, the first and the second subset of pins having no pins in common, the apparatus comprising detectors (205, 206) for detecting which of a first and a second service is signaled on the first and the second subset of pins, and a selector component (207) for selecting and activating the detected service on the apparatus.

8. An apparatus according to claim 7 wherein the apparatus is a residential gateway.
